# EUROPÄISCHE PATENTANMELDUNG

(11) **EP 3 070 820 A1**
(43) Veröffentlichungstag der Anmeldung: **21.09.2016**
(21) Anmeldenummer: 16159781.0
(22) Anmeldetag: 11.03.2016
(51) Int. Cl.: H02K 7/02, F16F 15/30

(54) **SCHWUNGRADENERGIESPEICHER**

(30) Priorität: 16.03.2015 DE 102015003313
(71) Anmelder: Rietzler, Manfred, 87616 Marktoberdorf (DE)
(72) Erfinder: Rietzler, Manfred, 87616 Marktoberdorf (DE)
(74) Vertreter: advotec.

(57) **Zusammenfassung**

Die vorliegende Erfindung betrifft einen Schwungradenergiespeicher umfassend ein Schwungradgehäuse mit einem Schwungradaufnahmeraum zur Aufnahme eines mit vertikaler Rotationsachse im Schwungradgehäuse aufgenommenen Schwungrades, einer wahlweise als Motor- oder Generator betreibbaren und auf der Rotationsachse angeordneten elektrischen Maschine, sowie einer auf der Rotationsachse angeordneten Schwungradlagereinrichtung, wobei der Schwungradspeicher modular aufgebaut ist, derart, dass das Schwungradgehäuse, die elektrische Maschine und zumindest ein zentrales Stützlager der Schwungradlagereinrichtung zur Abstützung eines auf der Rotationsachse des Schwungrades angeordneten unteren Schwungradwellenzapfens als modulare Komponenten des Schwungradgehäuses ausgebildet sind, und das Schwungradgehäuse zumindest teilweise in einem vor Ort verarbeitbaren Baustoff, insbesondere Ortbeton, oder aus Fertigteilen, insbesondere Betonfertigteilen, zusammengesetzt ausgebildet ist.

## Beschreibung

Die vorliegende Erfindung betrifft einen Schwungradenergiespeicher umfassend ein Schwungradgehäuse mit einem Schwungradaufnahmeraum zur Aufnahme eines mit vertikaler Rotationsachse im Schwungradgehäuse aufgenommenen Schwungrades, einer wahlweise als Motor- oder Generator betreibbaren und auf der Rotationsachse angeordneten elektrischen Maschine, sowie einer auf der Rotationsachse angeordneten Schwungradlagereinrichtung.

Die bekannten Schwungradenergiespeicher werden als mobile Energiespeicher ortsunabhängig eingesetzt. Hierzu werden die Schwungradenergiespeicher entweder als Aggregate ausgeführt, die mit Energie erzeugenden Komponenten von Kraftfahrzeugen kombiniert werden, so dass die Schwungradenergiespeicher zusammen mit den Kraftfahrzeugen eine automobile Einheit bilden, oder die Schwungradenergiespeicher sind als temporär stationäre Energiespeicher ausgebildet, die als Einheit an wechselnde Einsatzorte transportiert werden.

In jedem Fall sind daher die bekannten Schwungradenergiespeicher hinsichtlich ihrer Abmessungen und Masse entsprechend begrenzt. Insbesondere daraus ergeben sich entsprechend begrenzte Energiespeichermengen, die bislang einer Verwendung von Schwungradenergiespeichern als Alternative zu anderen Energiespeichern, wie Batteriespeicherkraftwerken oder Pumpspeicherkraftwerken, entgegenstehen. Dies liegt vor allem daran, dass wirtschaftliche Energiespeichermengen eine Größe und entsprechende Masse von Schwungradenergiespeichern voraussetzen, die eine Handhabung und einen Transport konventionell aufgebauter Schwungradenergiespeicher unmöglich machen.

Der vorliegenden Erfindung liegt daher die Aufgabe zugrunde, einen Schwungradenergiespeicher vorzuschlagen mit einem Aufbau, der die Realisierung von Schwungradenergiespeichern mit großen Energiespeichermengen ermöglicht.

Zur Lösung dieser Aufgabe weist der erfindungsgemäße Schwungradenergiespeicher die Merkmale des Anspruchs 1 auf.

Erfindungsgemäß weist der Schwungradenergiespeicher einen modularen Aufbau auf, derart, dass das Schwungradgehäuse, die elektrische Maschine und zumindest ein zentrales Stützlager der Schwungradlagereinrichtung zur Abstützung eines auf der Rotationsachse des Schwungrades angeordneten unteren Schwungradwellenzapfens als modulare Komponenten des Schwungradgehäuses ausgebildet sind, und das Schwungradgehäuse zumindest teilweise in einem vor Ort verarbeitbaren Baustoff, insbesondere Ortbeton, oder aus Fertigteilen, insbesondere Betonfertigteilen, zusammengesetzt ausgebildet ist.

Der erfindungsgemäß ausgestaltete Schwungradenergiespeicher ermöglicht ein Design der an sich bekannten Schwungradenergiespeicher in einer bislang nicht wirtschaftlich realisierbaren Größenordnung. Anders als die bekannten Schwungradenergiespeicher, bei denen für die mobile Ausführung eines Schwungradenergiespeichers Schwungradmassen im Bereich von bis zu einigen Kilogramm oder allenfalls bis in den zweistelligen Kilogrammbereich realisiert werden, und die Schwungräder mit einer entsprechend hohen Drehzahl betrieben werden müssen, die zwischen dem Schwungrad und der elektrischen Maschine zumindest eine Getriebestufe erforderlich macht, ermöglicht die erfindungsgemäße Ausgestaltung Schwungradmassen in einer Größenordnung von 10 Tonnen und mehr.

Möglich wird dies durch den modularen Aufbau, der zum einen eine getrennte Herstellung oder Bereitstellung des Gehäuses oder von Gehäusekomponenten unabhängig von technischen Funktionskomponenten, wie das zentrale Stützlager und die elektrische Maschine, ermöglicht, sowie die Ausgestaltung des Gehäuses oder von Gehäusekomponenten in einem vor Ort verarbeitbaren Baustoff oder als Betonfertigteile, so dass der Schwungradenergiespeicher an dem für seinen dauerhaft stationären Betrieb vorgesehenen Ort aus den Komponenten errichtet werden kann und nicht als zusammenhängende Einheit zum Betriebsort transportiert werden muss. Stattdessen werden die Komponenten zum Betriebsort transportiert oder sogar teilweise als Gehäusekomponenten erst am Betriebsort hergestellt.

Damit werden Schwungradenergiespeicher realisierbar mit einer Speicherenergie in entsprechender Größenordnung, also im Bereich von mehreren 100 kWh. Aufgrund der geringen Drehzahl der Schwungräder im Bereich von 0 bis 3000 upm kann die Kopplung zur Maschine direkt erfolgen, ohne dass eine zwischengeschaltete Getriebestufe benötigt wird.

Vorzugsweise können die Gehäusekomponenten in armierter Betonbauweise, insbesondere Stahlbeton, ausgeführt werden, so dass die benötigte Masse besonders preisgünstig und insbesondere als Ortbeton ohne besondere logistische Herausforderung an Ort und Stelle bereit gestellt werden kann.

Vorzugsweise sind die elektrische Maschine und das Stützlager außerhalb des Schwungradaufnahmeraums des Schwungradgehäuses angeordnet, so dass bei einem Betrieb des Schwungrades in einer Unterdruckumgebung trotz der Größe des Schwungrades nur ein relativ kleiner Raum zu entlüften ist.

Wenn das Schwungradgehäuse zur Ausbildung des Schwungradaufnahmeraums einen wannenförmig ausgebildeten Aufnahmeteil und einen Deckel aufweist, ist eine möglichst einfache Ausgestaltung des Schwungradaufnahmeraums möglich.

Eine trotz der Größe des Schwungradgehäuses möglichst kompakte Ausgestaltung wird möglich, wenn der Deckel eine Wellendurchführung zur Durchführung eines oberen Schwungradwellenzapfens aufweist und als Bodenplatte zur Montage der elektrischen Maschine dient.

Vorzugsweise weist der Aufnahmeteil als Boden eine Gehäuseplatte mit einer Wellendurchführung zur Durchführung des unteren Schwungradwellenzapfens auf.

Wenn das Schwungradgehäuse unterhalb der Gehäuseplatte des Aufnahmeteils eine Bodenplatte zur Abstützung des zentralen Stützlagers aufweist, ist das außerhalb des Schwungradaufnahmeraums angeordnete Stützlager sogar während des Betriebs leicht zugänglich.

Eine besonders einfache und darüber hinaus für Schwungräder unterschiedlicher Massen grundsätzlich einheitlich ausgestaltete Lagerung wird möglich, wenn das zentrale Stützlager als hydrostatisches Lager ausgebildet ist, da Anpassungen an unterschiedliche Massen leicht durch eine Änderung des Lagerdrucks vorgenommen werden können.

Besonders vorteilhaft ist es, wenn in einem Zylinderraum des Stützlagers ein von einer axialen Stirnfläche des Schwungradwellenzapfens begrenzter Hubraum ausgebildet ist, so dass der Schwungradwellenzapfen unmittelbar als Druckkolben genutzt werden kann.

Wenn der Zylinderraum oberhalb des Hubraums eine Radiallagerung aufweist, kann das zentrale Stützlager gleichzeitig zur Aufnahme etwaiger möglicher Unwuchtkräfte dienen.

Besonders vorteilhaft ist es, wenn der Schwungradaufnahmeraum unterhalb einer radial außen liegenden Randfläche der Stirnfläche des Schwungrads eine Anlauffläche aufweist, so dass die Anlauffläche, vorzugsweise kombiniert mit einer Absenkung des unteren Schwungradwellenzapfens durch eine Reduzierung des Drucks im hydrostatischen Stützlager, zur Abbremsung des rotierenden Schwungrades genutzt werden kann. Hierzu ist die Anlauffläche vorzugsweise mit einem Reibbelag versehen.

Wenn das Schwungrad zumindest teilweise in einem vor Ort verarbeitbaren Baustoff, insbesondere Ortbeton, oder aus Fertigteilen, insbesondere Betonfertigteilen, zusammengesetzt ausgebildet ist, sind für das Schwungrad dieselben Vorteile erzielbar, wie vorstehend im Zusammenhang mit dem Schwungradgehäuse bereits ausführlich erläutert.

Vorzugsweise weist das Schwungrad eine mit einer Schwungradwelle verbundene Tragstruktur auf, so dass unterschiedliche Materialien zur Ausbildung der gewünschten Schwungradmasse mit der Tragstruktur kombiniert werden können.

Vorzugsweise ist das Schwungrad am äußeren Umfang mit einer Mantelstruktur versehen, so dass auf die Schwungradmasse und insbesondere die Peripherie der Schwungradmasse wirkende Fliehkräfte von der Mantelstruktur zumindest anteilig aufgenommen werden können.

Wenn die Mantelstruktur als Faserverbundstruktur ausgebildet ist, kann die Mantelstruktur trotz möglichst raumsparender Ausgestaltung, die eine möglichst vollständige Ausnutzung des peripheren Schwungradvolumens für ein Material hoher Dichte ermöglicht, hochfest ausgelegt werden.

Wenn die Faserverbundstruktur als Kohlefaserstruktur ausgebildet ist, kommt neben einer geringen Dichte zusätzlich noch eine hohe Temperaturfestigkeit hinzu.

Vorzugsweise ist das Schwungradgehäuse mit einer Bodenplattenbasis versehen, die eine unter einem Azimutwinkel gegenüber der Horizontalen geneigte Stützebene für das Stützlager definiert.

Hierdurch wird es möglich, den Schwungradaufnahmeraum mit der darin aufgenommenen Schwungradwelle um den Azimutwinkel gegenüber der Vertikalen zu neigen, um der Ausbildung einer einseitigen radialen Lagerkraft infolge der in Abhängigkeit von der Rotationsgeschwindigkeit und vom Abstand der Schwungradwelle von der Erdrotationsachse auf die Schwungradwelle wirkenden Corioliskraft entgegenzuwirken.

Vorzugsweise weist die Bodenplattenbasis zwischen der Stützebene und einer Grundplatte einen vorzugsweise als Anstellstützring ausgebildeten Stützrahmen zur Abstützung der Bodenplatte auf.

Nachfolgend werden bevorzugte Ausführungsformen der Erfindung anhand der Zeichnung näher erläutert.

Es zeigen:
- **Fig. 1:**: einen Schwungradenergiespeicher in einer ersten Ausführungsform mit einem auf einer Bodenplatte angeordneten zentralen Stützlager;
- **Fig. 2:**: eine Ausführungsform eines zentralen Stützlagers;
- **Fig. 3:**: den in **Fig.1** dargestellten Schwungradenergiespeicher mit einer Bodenplattenbasis zur Anordnung der Bodenplatte.

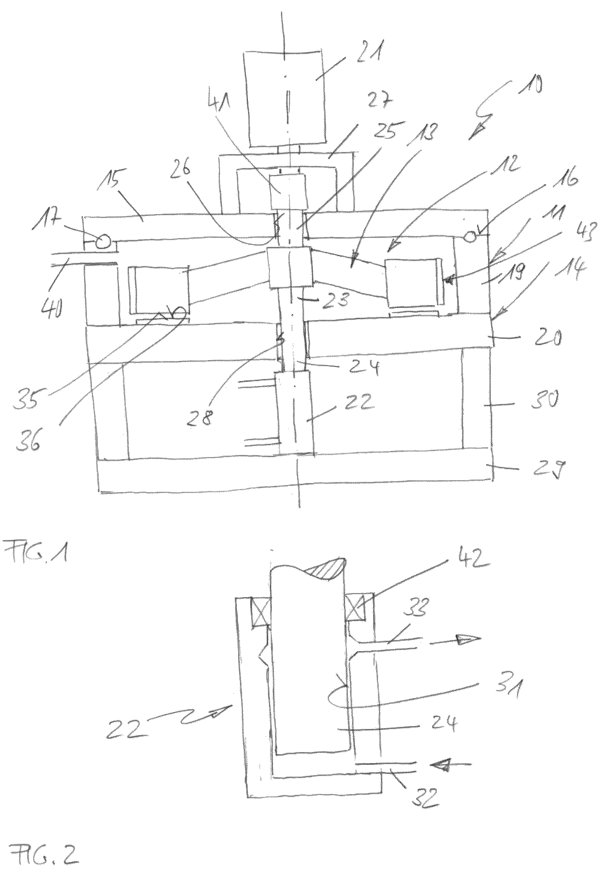

**Fig. 1** zeigt einen Schwungradenergiespeicher 10 mit einem Schwungradgehäuse 11, das einen Schwungradaufnahmeraum 12 ausbildet, in dem ein Schwungrad 13 aufgenommen ist. Der Schwungradaufnahmeraum 12 ist als hermetisch abgeschlossener Gehäuseteil ausgebildet, so dass es möglich ist, eine definierte Atmosphäre in dem Schwungradaufnahmeraum 12 auszubilden, die im Fall des vorliegenden Ausführungsbeispiels als Vakuumatmosphäre definiert ist, wobei der Schwungradaufnahmeraum 12 mit einem Vakuumanschluss 40 versehen ist.

Der Schwungradaufnahmeraum 12 ist durch einen wannenförmigen Aufnahmeteil 14 des Schwungradgehäuses 11 und einen auf dem Aufnahmeteil angeordneten Deckel 15 gebildet, der auf einem Dichtungsrand 16 des Aufnahmeteils 14 mit zwischenliegend angeordneter Dichtungseinrichtung 17 angeordnet ist. Der Aufnahmeteil 14 ist im Fall des dargestellten Ausführungsbeispiels mehrteilig aus einem Gehäusering 19 und einer Gehäuseplatte 20 gebildet.

Bei dem dargestellten Ausführungsbeispiel befinden sich eine als Motor-/Generator-Einheit ausgebildete elektrische Maschine 21 sowie ein zentrales Stützlager 22 zur Abstützung des Schwungrades 13 außerhalb des Schwungradaufnahmeraums 12. Das Schwungrad 13 weist eine zentrale Schwungradwelle 23 auf, deren axiale Enden durch einen unteren Schwungradwellenzapfen 24 und eine oberen Schwungradwellenzapfen 25 gebildet sind, wobei der obere Schwungradwellenzapfen 25 durch eine gegenüber der Umgebung des Schwungradaufnahmeraums 12 abgedichtete Wellendurchführung 26 im Deckel 15 hindurchgeführt ist, derart, dass die sich über ein Maschinengestell 27 auf dem Deckel 15 abstützende Maschine 21 auf dem Schwungradwellenzapfen 25 angeordnet werden kann und der untere, durch eine Wellendurchführung 28 in der Gehäuseplatte 20 hindurchgeführte Schwungradwellenzapfen 24 in dem zentralen Stützlager 22 aufgenommen ist.

Zur Abstützung des Stützlagers 22 ist eine Bodenplatte 29 vorgesehen, die über einen Stützring 29 des Schwungradgehäuses 11 mit der Gehäuseplatte 20 des Schwungradaufnahmeraums 12 verbunden ist. Hieraus ergibt sich insgesamt ein Aufbau des Schwungradgehäuses 11 aus besonders einfach ausgestalteten Komponenten, nämlich eine Bodenplatte 29, eine Gehäuseplatte 20 und ein Deckel 15, die scheibenförmig ausgebildet sind und zur Ausbildung des Schwungradgehäuses 11 und definierten Relativanordnung mit dem Gehäusering 19 und dem Stützring 30 kombiniert sind.

Wie sich aus dem Vorstehenden ergibt, ist das Schwungradgehäuse 11 modular aus Komponenten aufgebaut, die neben den maschinenbaulichen oder elektrotechnischen Komponenten, wie das zentrale Stützlager 22 und die Maschine 21, Gehäusebestandteile, wie die Bodenplatte 29, die Gehäuseplatte 20, den Deckel 15, den Gehäusering 19 und den Stützring 30, umfassen, die konfektioniert als Fertigteile an den Installationsort des Schwungradenergiespeichers 10 angeliefert oder vor Ort aus einem vor Ort verarbeitbaren Werkstoff, wie etwa Ortbeton, hergestellt und zur Ausbildung des Schwungradgehäuses 11 miteinander kombiniert werden können.

Das in den Fig. 1 und 2 dargestellte Stützlager 22 ist als hydrostatisches Lager ausgebildet mit einem Zylinderraum 31, in dem der untere Schwungradwellenzapfen 24 als Kolben geführt ist. Der Zylinderraum 31 ist mit einer Ölzuführung 32 und einer Ölabführung 33 versehen, die jeweils eine nicht näher dargestellte Ventileinrichtung zur Strömungsregelung aufweisen, derart, dass der Schwungradwellenzapfen 24 definiert angehoben oder abgesenkt werden kann, wobei eine zwischen dem oberen Schwungradwellenzapfen 25 und der Maschine 21 vorgesehene Kupplung 41 eine entsprechende axiale Relativbewegung des Schwungradwellenzapfens 25 gegenüber der Maschine 21 ermöglicht.

Das Absenken kann insbesondere für ein Abbremsen eines rotierenden Schwungrades 13 genutzt werden, wobei infolge des Absenkens ein Reibungskontakt zwischen einer im Bereich einer radial außen liegenden Randfläche der unteren Stirnfläche 34 des Schwungrades 13 ausgebildeten Anlauffläche 35 mit einer korrespondierend auf der Gehäuseplatte 19 angeordneten Kontaktfläche 36 hergestellt wird.

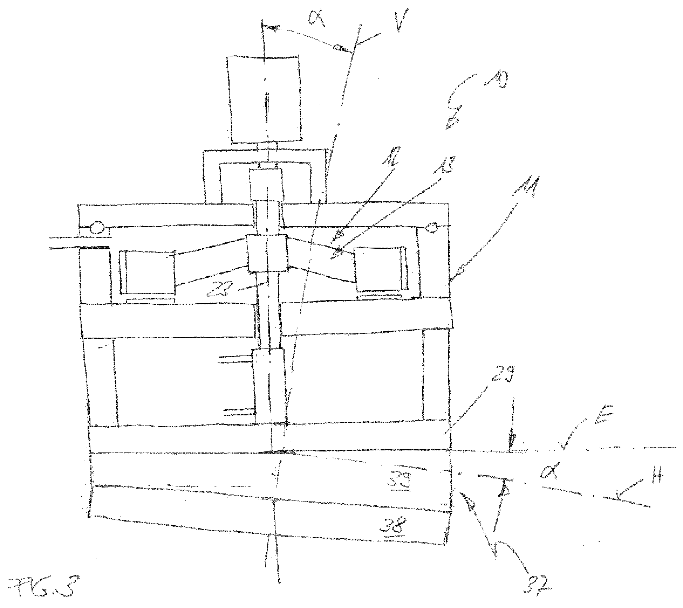

Wie Fig. 3 zeigt, kann die Bodenplatte 29, welche zur Abstützung des zentralen Stützlagers 22 dient, mit einer Bodenplattenbasis 37 versehen sein, welche ihrerseits aus mehreren Komponenten modular aufgebaut sein kann und im vorliegenden Fall eine Grundplatte 38 mit einem Anstellstützring 39 aufweist, der es ermöglicht, die Bodenplatte 29 unter einem definierten Azimutwinkel α gegenüber der Horizontalen H anzuordnen. Hierdurch wird es möglich, den Schwungradaufnahmeraum12 mit der darin aufgenommenen Schwungradwelle 23 um den Azimutwinkel α gegenüber der Vertikalen zu neigen, um der Ausbildung einer einseitigen radialen Lagerkraft infolge der in Abhängigkeit von der Rotationsgeschwindigkeit und vom Abstand der Schwungradwelle 23 von der Erdrotationsachse auf die Schwungradwelle 23 wirkenden Corioliskraft entgegenzuwirken.

Auch unabhängig vom Auftreten einer Corioliskraft ist es sinnvoll, das radiale Stützlager 22 mit einer in Fig.2 beispielhaft dargestellten Radiallagerung 42 zu versehen, um Radialkräfte, die auch durch eine Unwucht des Schwungrades induziert sein können, aufnehmen zu können.

Wie die vorstehend erläuterten Komponenten des Schwungradgehäuses 11 ist bei dem dargestellten Ausführungsbeispiel das Schwungrad 13 ebenfalls aus konfektionierten Fertigteilen vor Ort zusammengebaut oder vor Ort aus einem vor Ort verarbeitbaren Werkstoff, wie etwa Ortbeton, hergestellt. Insbesondere bei einer Herstellung aus Beton ist es vorteilhaft, das Schwungrad am äußeren Umfang mit einer Mantelstruktur 43 aus einer Faserverbundstruktur, insbesondere aus Kohlefaser, zu versehen, um die auf die Betonstruktur wirkenden Fliehkräfte aufzunehmen.

## Patentansprüche

1. Schwungradenergiespeicher (10) umfassend ein Schwungradgehäuse (11) mit einem Schwungradaufnahmeraum (12) zur Aufnahme eines mit vertikaler Rotationsachse R im Schwungradgehäuse aufgenommenen Schwungrades (13), einer wahlweise als Motor- oder Generator betreibbaren und auf der Rotationsachse angeordneten elektrischen Maschine, sowie einer auf der Rotationsachse angeordneten Schwungradlagereinrichtung,
**gekennzeichnet durch**
einen modularen Aufbau des Schwungradspeichers, derart, dass das Schwungradgehäuse, die elektrische Maschine und zumindest ein zentrales Stützlager (22) der Schwungradlagereinrichtung zur Abstützung eines auf der Rotationsachse des Schwungrades angeordneten unteren Schwungradwellenzapfens (24) als modulare Komponenten des Schwungradgehäuses ausgebildet sind, und das Schwungradgehäuse zumindest teilweise in einem vor Ort verarbeitbaren Baustoff, insbesondere Ortbeton, oder aus Fertigteilen, insbesondere Betonfertigteilen, zusammengesetzt ausgebildet ist.

2. Schwungradspeicher nach Anspruch 1,
**dadurch gekennzeichnet,**
**dass** die elektrische Maschine (21) und das Stützlager (22) außerhalb des Schwungradaufnahmeraums (12) des Schwungradgehäuses (11) angeordnet sind.

3. Schwungradspeicher nach Anspruch 2,
**dadurch gekennzeichnet,**
**dass** das Schwungradgehäuse (11) zur Ausbildung des Schwungradaufnahmeraums (12) einen wannenförmig ausgebildeten Aufnahmeteil (14) und einen Deckel (15) aufweist.

4. Schwungradspeicher nach Anspruch 3,
**dadurch gekennzeichnet,**
**dass** der Deckel (15) eine Wellendurchführung (26) zur Durchführung eines oberen Schwungradwellenzapfens (25) aufweist und als Bodenplatte zur Montage der elektrischen Maschine (21) dient.

5. Schwungradspeicher nach Anspruch 3,
**dadurch gekennzeichnet,**
**dass** der Aufnahmeteil (14) eine Gehäuseplatte (20) mit einer Wellendurchführung (28) zur Durchführung des unteren Schwungradwellenzapfens (24) aufweist.

6. Schwungradspeicher nach Anspruch 5,
**dadurch gekennzeichnet,**
**dass** das Schwungradgehäuse (11) unterhalb der Gehäuseplatte (20) des Aufnahmeteils (14) eine Bodenplatte (29) zur Abstützung des zentralen Stützlagers (22) aufweist.

7. Schwungradspeicher nach einem der vorangehenden Ansprüche, **dadurch gekennzeichnet,**
**dass** das zentrale Stützlager (22) als hydrostatisches Lager ausgebildet ist.

8. Schwungradspeicher nach Anspruch 7,
**dadurch gekennzeichnet,**
**dass** in einem Zylinderraum (31) des Stützlagers (22) ein von einer axialen Stirnfläche des unteren Schwungradwellenzapfens (24) begrenzter Hubraum ausgebildet ist.

9. Schwungradspeicher nach Anspruch 8,
**dadurch gekennzeichnet,**
**dass** der Zylinderraum (31) oberhalb des Hubraums eine Radiallagerung (42) aufweist.

10. Schwungradspeicher nach einem der vorangehenden Ansprüche, **dadurch gekennzeichnet,**
**dass** der Schwungradaufnahmeraum (12) unterhalb einer radial außen liegenden Anlauffläche (35) der Stirnfläche des Schwungrads (13) eine Kontaktfläche (36) aufweist.

11. Schwungradspeicher nach Anspruch 10,
**dadurch gekennzeichnet,**
**dass** die Kontaktfläche (36) mit einem Reibbelag versehen ist.

12. Schwungradspeicher nach Anspruch 10,
**dadurch gekennzeichnet,**
**dass** die Anlauffläche (35) einen Reibbelag aufweist.

13. Schwungradspeicher nach einem der vorangehenden Ansprüche, **dadurch gekennzeichnet,**
**dass** das Schwungrad (13) zumindest teilweise in einem vor Ort verarbeitbaren Baustoff, insbesondere Ortbeton, oder aus Fertigteilen, insbesondere Betonfertigteilen, zusammengesetzt ausgebildet ist.

14. Schwungradspeicher nach Anspruch 13,
**dadurch gekennzeichnet,**
**dass** das Schwungrad (13) eine mit einer Schwungradwelle (23) verbundene Tragstruktur aufweist.

15. Schwungradspeicher nach Anspruch 13 oder 14,
**dadurch gekennzeichnet,**
**dass** das Schwungrad (13) am äußeren Umfang mit einer Mantelstruktur (43) versehen ist.

16. Schwungradspeicher nach Anspruch 15,
**dadurch gekennzeichnet,**
**dass** die Mantelstruktur (43) als Faserverbundstruktur ausgebildet ist.

17. Schwungradspeicher nach Anspruch 16,
**dadurch gekennzeichnet,**
**dass** die Faserverbundstruktur als Kohlefaserstruktur ausgebildet ist.

18. Schwungradspeicher nach einem der vorangehenden Ansprüche, **dadurch gekennzeichnet,**
**dass** das Schwungradgehäuse (11) mit einer Bodenplattenbasis (37) versehen ist, die eine unter einem Azimutwinkel α gegenüber der Horizontalen H geneigte Stützebene E für das Stützlager (22) definiert.

19. Schwungradspeicher nach Anspruch 18,
**dadurch gekennzeichnet,**
**dass** die Bodenplattenbasis (37) zwischen der Stützebene E und einer Grundplatte (38) einen vorzugsweise als Anstellstützring (39) ausgebildeten Stützrahmen zur Abstützung der Bodenplatte (29) aufweist.
